# EUROPEAN PATENT SPECIFICATION

(11) **EP 4 351 919 B1**
(45) Date of publication and mention of the grant of the patent: **23.07.2025**
(21) Application number: 22731264.2
(22) Date of filing: 10.06.2022
(51) Int. Cl.: B60L 53/68, B60L 53/65, B60L 53/66, B60L 3/00

(54) **BACKUP ELECTRIC VEHICLE CHARGING MANAGEMENT**
RESERVELADEVERWALTUNG FÜR ELEKTROFAHRZEUGE
GESTION DE RECHARGE DE VÉHICULE ÉLECTRIQUE DE SECOURS

(30) Priority: 10.06.2021 FI 20215681
(43) Date of publication of application: 17.04.2024
(73) Proprietor: LIIKENNEVIRTA OY / VIRTA LTD, 00180 Helsinki (FI)
(72) Inventor: AHTIKARI, Jussi, 00730 Helsinki (FI)
(74) Representative: Papula Oy
(86) International application number: PCT/FI2022/050405
(87) International publication number: WO 2022/258888

(56) References cited:
- CN-A- 102 110 994
- CN-A- 106 651 483
- CN-B- 105 897 898
- US-A1- 2010 315 197
- US-A1- 2013 110 296
- US-A1- 2017 004 712
- US-A1- 2020 133 267
- US-A1- 2020 200 824

## Description

### TECHNICAL FIELD

The present disclosure relates to electric vehicle charging, and more particularly to an electric vehicle charging management backup method and device.

### BACKGROUND

Electric vehicle (EV) charging stations are typically managed by a management system, such as a charging point management system (CPMS). A CPMS can handle different operations related to EV charging. Usually CPMSs have quite a complicated technical architecture and logic. In order for the CPMS to give a valid reply to a request by an EV charging station, all the technical components may need to be functioning properly. However, no technology is perfect, and sometimes CPMS systems have technical issues. When this occurs, it is quite common for customers to not be able to charge their vehicles using the EV charging stations until issues with the CPMS have been resolved.

Publication US2020/133267A1 discloses a method for controlling a vehicle that includes: establishing, by a vehicle controller, a connection between a client and a plurality of servers, the plurality of servers includes a primary server and at least one replica server, the at least one replica server is a replica of the primary server; making, by the vehicle controller, a data request about a given service to the plurality of servers; in response to the data request, receiving reply data from the plurality of servers to the data request via a middleware; fusing, by the middleware, the reply data from the plurality of servers to generate a resulting data; receiving, by the vehicle controller, the resulting data; and controlling, by the client, the vehicle based on the resulting data.

Publication US2017/004712A1 discloses a regional electric vehicle sharing and management system that includes a system backup server connected to a system management server via an Intranet wherein both the system management server and the system backup server are configured to access the Internet via the Intranet; mobile devices, each configured to access the Internet via a telecommunications network or a wireless network; computers, each configured to access the Internet via a wired network or a wireless network; battery exchange devices, each including batteries, a charging circuit, and a power monitoring system wherein the batteries, the charging circuit, and the power monitoring system are electrically connected together, and the batteries are respectively mounted in the charging circuit; and electric vehicles, each including batteries and vehicle control systems they are electrically connected together.

Publication US2020/200824A1 discloses a method comprising connecting, by a battery analytics server, to a blockchain network that includes a plurality of charging station nodes, acquiring, by the battery analytics server, a current battery data from a charging station node of the plurality of the charging station nodes, the current battery data includes a battery identification (ID), storing, by the battery analytics server, the current battery data with a timestamp onto a blockchain ledger, comparing, by the battery analytics server, the current battery data against a pre-stored battery data based on the battery ID, and in response to a match, issuing, by the battery analytics server, a certification for a battery to be released from the charging station node of the plurality of the charging station nodes to a user.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a backup electric vehicle charging management device and a corresponding method. The foregoing and other objects are achieved by the features of the independent claims. Further implementation forms are apparent from the dependent claims, the description and the figures.

According to a first aspect, a backup electric vehicle, EV, charging management device comprises: at least one processor; and at least one memory including computer program code; the at least one memory and the computer program code configured to, with the at least one processor, cause the backup EV charging management device to: when a primary EV charging management system is available, synchronize an identification cache of a backup EV charging management system with an identification cache of the primary EV charging management system, wherein the identification cache of the primary EV charging management system comprises identifications of EV charging station users that are allowed to use an EV charging station; when the primary EV charging management system is unavailable, receive a message from the EV charging station; in response to the message being a request for charging using the EV charging station, wherein the request comprises an identification of a user trying to use the EV charging station, check whether the request should be allowed by comparing the identification of the user trying to use the EV charging station to the identification cache of the backup EV charging management system; and in response to determining that the request should be allowed, transmit an acceptance message, indicating to accept the use of the EV charging station, to the EV charging station. The backup EV charging management device can, for example, enable users to charge using the EV charging station while the primary EV charging management system is unavailable.

In an implementation form of the first aspect, the at least one memory and the computer program code are further configured to, with the at least one processor, cause the backup EV charging management device to: in response to an error with the identification cache of the backup EV charging management system, when trying to compare the identification of the user trying to use the EV charging station to the identification cache of the backup EV charging management system, transmit an acceptance message, indicating to accept the use of the EV charging station, to the EV charging station. The backup EV charging management device can, for example, enable users to charge using the EV charging station while the primary EV charging management system is unavailable and there is an error with the identification cache.

In another implementation form of the first aspect, the error with the identification cache of the backup EV charging management system comprises the identification cache of the backup EV charging management system being unavailable or being out-of-date. The backup EV charging management device can, for example, enable users to charge using the EV charging station while the primary EV charging management system is unavailable and the identification cache is unavailable or out-of-date.

In another implementation form of the first aspect, the at least one memory and the computer program code are further configured to, with the at least one processor, cause the backup EV charging management device to in response to the message comprising a boot notification, a status notification, a meter value, and/or a heartbeat, transmit an acknowledge message to the EV charging station. The backup EV charging management device can, for example, response to less critical messages with reduced complexity and/or greater reliability when the primary EV charging management system is unavailable.

In another implementation form of the first aspect, the at least one memory and the computer program code are further configured to, with the at least one processor, cause the backup EV charging management device to: store the message and the response transmitted by the backup EV charging management device in response to the message to a message cache; and in response to the primary EV charging management system becoming available, provide the messages and the responses from the message cache to the primary EV charging management system. The backup EV charging management device can, for example, provide the stored messages to the primary EV charging management system so that the messages can be processed appropriately.

In another implementation form of the first aspect, the at least one memory and the computer program code are further configured to, with the at least one processor, cause the backup EV charging management device to: store, with the message and a response transmitted by the backup EV charging management device in response to the message, an identification of the EV charging station and/or a status indicating whether the message has been provided to the primary EV charging management system, to the message cache. The backup EV charging management device can, for example, keep track of which messages have been processed by the primary EV charging management system.

In another implementation form of the first aspect, the at least one memory and the computer program code are further configured to, with the at least one processor, cause the backup EV charging management device to: receive, from the primary EV charging management system, for each message, an indication whether the message is approved or rejected by the primary EV charging management system; and compose an offloading report based at least on the received indications. The backup EV charging management device can, for example,

In another implementation form of the first aspect, the offloading report comprises an indication of each message rejected by the primary EV charging management system and an identifier of an EV charging station from which the message was sent. The backup EV charging management device can, for example, keep track of at which EV charging stations possibly problematic charging has occurred.

In another implementation form of the first aspect, the at least one memory and the computer program code are further configured to, with the at least one processor, cause the backup EV charging management device to provide the offloading report to an administrator. The backup EV charging management device can, for example, conveniently provide to the administrator information about at which EV charging stations possibly problematic charging has occurred.

It is to be understood that the implementation forms of the first aspect described above may be used in combination with each other. Several of the implementation forms may be combined together to form a further implementation form.

According to a second aspect, an electric vehicle, EV, charging system comprises: a primary EV charging management system; a backup EV charging management system comprising a backup EV charging management device according to the first aspect; at least one EV charging station; and a load balancer configured to forward messages from the at least one EV charging station to the primary EV charging management system when the primary EV charging management system is available and forward messages from the at least one EV charging station to the backup EV charging management system when the primary EV charging management system is unavailable.

According to a third aspect, a method comprises: when a primary electric vehicle, EV, charging management system is available, synchronizing an identification cache of a backup EV charging management system with an identification cache of the primary EV charging management system, wherein the identification cache of the primary EV charging management system comprises identifications of EV charging station users that are allowed to use an EV charging station; when the primary EV charging management system is unavailable, receiving a message from the EV charging station; in response to the message being a request for charging using the EV charging station, wherein the request comprises an identification of a user trying to use the EV charging station, checking whether the request should be allowed by comparing the identification of the user trying to use the EV charging station to the identification cache of the backup EV charging management system; and in response to determining that the request should be allowed, transmitting an acceptance message, indicating to accept the use of the EV charging station, to the EV charging station.

In an implementation form of the third aspect, the method further comprises, in response to an error with the identification cache of the backup EV charging management system, when trying to compare the identification of the user trying to use the EV charging station to the identification cache of the backup EV charging management system, transmitting an acceptance message, indicating to accept the use of the EV charging station, to the EV charging station.

In an implementation form of the third aspect, the error with the identification cache of the backup EV charging management system comprises the identification cache of the backup EV charging management system being unavailable or being out-of-date.

It is to be understood that the implementation forms of the third aspect described above may be used in combination with each other. Several of the implementation forms may be combined together to form a further implementation form.

According to a fourth aspect, a computer program product is provided, comprising program code configured to perform a method according to the third aspect when the computer program is executed on a computer.

Many of the attendant features will be more readily appreciated as they become better understood by reference to the following detailed description considered in connection with the accompanying drawings. The invention is defined in the appended claims.

### DESCRIPTION OF THE DRAWINGS

In the following, embodiments of the disclosure are described in more detail with reference to the attached figures and drawings, in which:
Fig. 1 illustrates a backup electric vehicle charging management device according to an embodiment;
Fig. 2 illustrates a schematic representation of an electric vehicle charging system according to an example;
Fig. 3 illustrates a schematic representation of an electric vehicle charging system according to an embodiment;
Fig. 4 illustrates a schematic representation of functionality of the electric vehicle charging system when the primary system is available according to an embodiment;
Fig. 5 illustrates a schematic representation of functionality of the electric vehicle charging system when the primary system is unavailable according to an embodiment;
Fig. 6 illustrates a schematic representation of functionality of the electric vehicle charging system when the primary system is again available after being unavailable according to an embodiment;
Fig. 7 illustrates a schematic representation of functionality of the electric vehicle charging system when the primary system is available, and the backup system is in advanced mode according to an embodiment;
Fig. 8 illustrates a schematic representation of functionality of the electric vehicle charging system when the primary system is unavailable, and the backup system is in advanced mode according to an embodiment;
Fig. 9 illustrates a schematic representation of a message cache according to an embodiment;
Fig. 10 illustrates a schematic representation of an offloading report according to an embodiment; and
Fig. 11 illustrates a schematic representation of a method according to an embodiment.

In the following, like reference numerals are used to designate like parts in the accompanying drawings.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilized, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

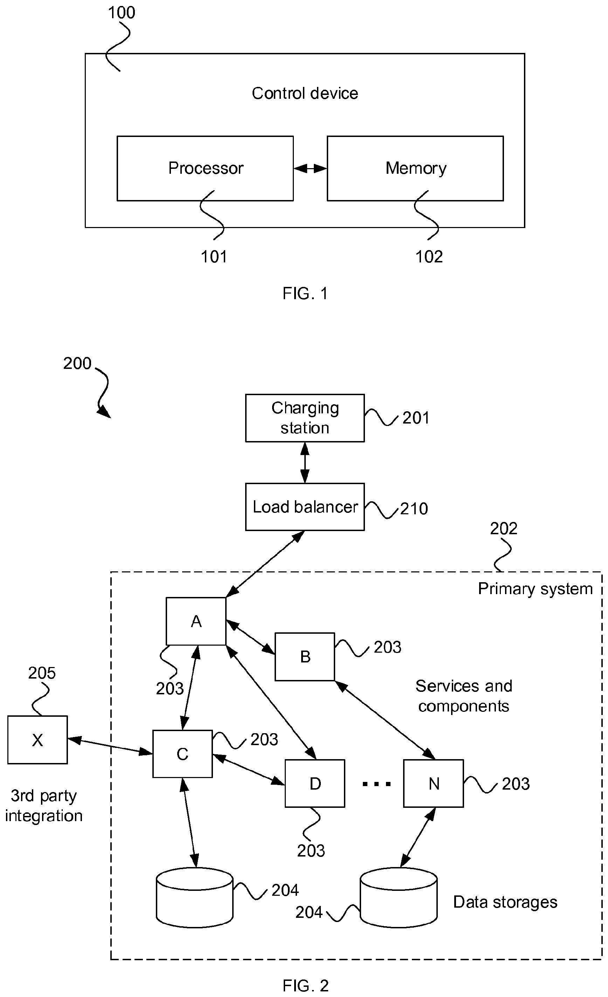

Fig. 1 illustrates a backup electric vehicle (EV) charging management device according to an embodiment.

According to an embodiment, a backup EV charging management device 100 comprises at least one processor 101 and at least one memory 102 including computer program code.

According to an embodiment, the at least one memory 102 and the computer program code are configured to, with the at least one processor 101, cause the backup EV charging management device 100 to, when a primary EV charging management system is available, synchronize an identification cache of a backup EV charging management system with an identification cache of the primary EV charging management system, wherein the identification cache of the primary EV charging management system comprises identifications of EV charging station users that are allowed to use an EV charging station.

Herein, the primary EV charging management system may be referred to simply as the primary system or similar, and the backup EV charging management system may be referred to simply as the backup system or similar.

The backup EV charging management device 100 may correspond to any device that is configured to control the backup EV charging management system. Herein, when the backup system is disclosed to perform some functionality, the backup EV charging management device 100 may be configured to perform, at least partially, that functionality.

Herein, an identification may comprise, for example, a so-called idTag of a user.

The backup EV charging management device 100 is further configured to, when the primary EV charging management system is unavailable, receive a message from the EV charging station.

The primary EV charging management system may be "unavailable" any time that the EV charging station cannot reach the primary EV charging management system. For example, a communication link between the EV charging station and the primary EV charging management system may be malfunctioning, the primary EV charging management system or some part of it may be malfunctioning, and/or the primary EV charging management system may be offline for maintenance or similar purposes.

The message may comprise, for example, information related to the operation of the EV charging station and/or a request related to the operation of the EV charging station.

The backup EV charging management device 100 is further configured to, in response to the message being a request for charging using the EV charging station, wherein the request comprises an identification of a user trying to use the EV charging station, check whether the request should be allowed by comparing the identification of the user trying to use the EV charging station to the identification cache of the backup EV charging management system.

Since the identification cache of the backup system is synchronized with the identification cache of the primary system, the backup EV charging management device 100 can check whether the request should be allowed even when the primary system is not available. Thus, users can still use the EV charging station even when the primary system is unavailable.

The identification cache may comprise, for example, a simple whitelist of identifications that should be allowed to charge. Alternatively, the identification cache may comprise more complex information/data based on which the backup EV charging management device 100 can check whether the request should be allowed.

The backup EV charging management device 100 is further configured to, in response to determining that the request should be allowed, transmit an acceptance message, indicating to accept the use of the EV charging station, to the EV charging station.

The acceptance message may comprise any data based on which the EV charging station can recognize that the use of the EV charging station should be accepted. The content of the acceptance message can be defined, for example, in a standard/protocol, such as the open charge point protocol (OCPP).

The backup EV charging management device 100 may be further configured to, in response to determining that the request should not be allowed, transmit a refusal message, indicating to refuse the use of the EV charging station, to the EV charging station.

The backup EV charging management device 100 comprises at least one processor 101. The at least one processor 101 may comprise, for example, one or more of various processing devices, such as a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The backup EV charging management device 100 further comprises a memory 102. The memory 102 may be configured to store, for example, computer programs and the like. The memory 102 may comprise one or more volatile memory devices, one or more non-volatile memory devices, and/or a combination of one or more volatile memory devices and non-volatile memory devices. For example, the memory 102 may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

When the backup EV charging management device 100 is configured to implement some functionality, some component and/or components of the backup EV charging management device 100, such as the at least one processor 101 and/or the memory 102, may be configured to implement this functionality. Furthermore, when the at least one processor 101 is configured to implement some functionality, this functionality may be implemented using program code comprised, for example, in the memory 102. For example, if the backup EV charging management device 100 is configured to perform an operation, the at least one memory 102 and the computer program code can be configured to, with the at least one processor 101, cause the backup EV charging management device 100 to perform that operation.

In some embodiments, the backup EV charging management device 100 may be implemented as and/or as a part of a cloud computing system.

The backup system can have a simple and lightweight structure. Thus, the backup system can be more robust and fault tolerant than the primary system.

The backup system can be compatible with various different EV charging station models. Alternative solutions may be proprietary and EV charging station model-specific.

The backup system can ensure that only authorized people can charge using the EV charging stations at least in most cases. Thus, no invalid data is recorded, and no data is lost, which can enable, for example, the correct invoicing of users.

Fig. 2 illustrates a schematic representation of an EV charging system 200 according to an example.

The system 200 may comprise one or more EV charging stations (CS) 201 that are connected to a primary EV charging management system 202. The system 200 may further comprise a load balancer 210. The load balancer 210 may forward messages from the one or more EV charging stations 201 to the primary EV charging management system 202 when the primary EV charging management system 202 is available. The load balancer 210 may also forward messages from the primary EV charging management system 202 to the one or more EV charging stations 201 when the primary EV charging management system 202 is available. The load balancer 210 may, for example, implement an application programming interface (API) using which the one or more EV charging stations 201 can communicate with the primary system 202.

The primary EV charging management system 202 may comprise, for example, a charging point management system (CPMS). The primary system 202 can handle different operations related to EV charging. The one or more EV charging stations 201 and the primary system 202 can communicate using, for example, the OCPP.

Herein, any messages transmitted and/or received by any system/device/component may comprise an OCPP message.

For example, when a user wishes to start charging using an EV charging station 201, the user can present a radio-frequency identification (RFID) card to the EV charging station 201. The station 201 can asks from the primary system 202, using for example the OCPP protocol, if the RFID is valid. The primary system 202 can process this request and respond back to the EV charging station 201 whether charging with the RFID can be allowed or not.

The primary system 202 can have quite a complicated technical architecture and logic. A modern CPMS can comprise tens or hundreds of different services, components, data storages, complex business logic, integrations to third party systems etc. For example, in the example of Fig. 2, the primary system 202 comprises various interconnected services and components 203, data storages 204, and integration to third parties 205. In order for the primary system 202 to give a valid reply, such as accepting or rejecting a charging request from an EV charging station 201, all the technical components should be functioning correctly.

Thus, the primary system 202 can have technical issues. When this occurs, it is quite common for a user to not be able to charge using the EV charging station 201 until the issues with the primary system 202 have been resolved.

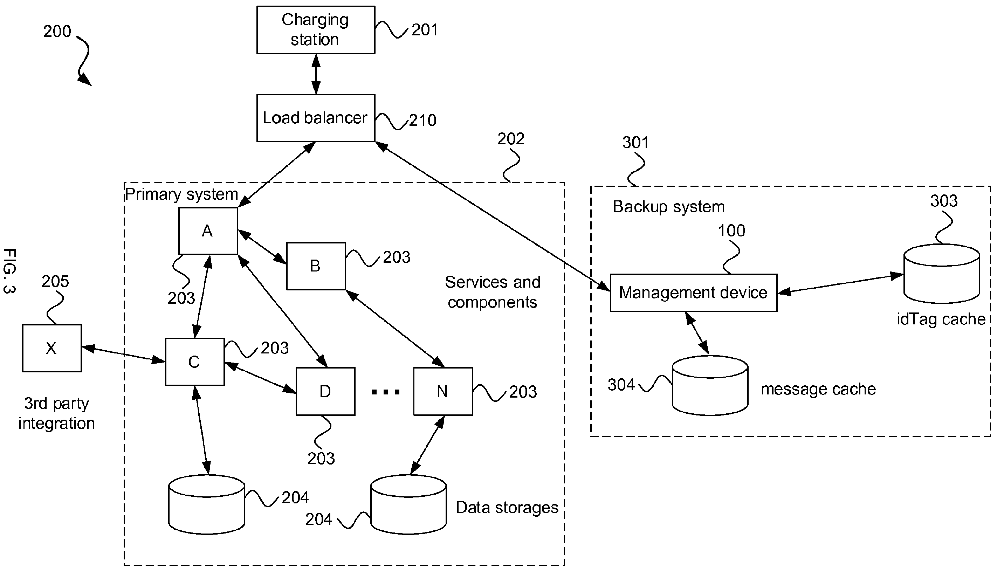

Fig. 3 illustrates a schematic representation of an EV charging system 200 according to an embodiment.

According to an embodiment, an EV charging system 200 comprises a primary EV charging management system 202, a backup EV charging management system 301 comprising a backup EV charging management device 100, at least one EV charging station 201, and a load balancer 210 configured to forward messages from the at least one EV charging station 201 to the primary EV charging management system 202 when the primary EV charging management system 202 is available and forward messages from the at least one EV charging station 201 to the backup EV charging management system 301 when the primary EV charging management system 202 is unavailable.

The backup system 301 can function as a lightweight, simple backup system that lacks all the complex business logic, integrations, data storages etc. of the primary system 202. Thus, the backup system 301 can be more fault tolerant and low cost.

The backup system 301 can have the capability to process critical OCPP messages, such as heartbeats, boot notifications, authentication, start- and stop-messages, even when the primary system 202 is offline.

In the case of major problems with the primary system 202, all OCPP traffic from EV charging stations 201 can be directed to the backup system 301 by, for example, the load balancer 210. The backup system 301 can then, for example, process few key OCPP messages from the EV charging stations 201, transmit replies back to the EV charging stations 201 based on limited simple logic, and allowing users to still charge using the EV charging stations 201. The backup system 301 may also store some or all OCPP messages to a local message cache 304 so that once the primary system 202 is available again, these messages can be processed by the primary system 202 to ensure that no data is lost during the downtime of the primary system 202.

Any devices/systems/components/modules disclosed herein may communicate with each other using, for example, a data connection. The data connection may be any connection that enables devices/systems/components/modules to communicate with each other. The data connection may comprise, for example, internet, Ethernet, 3G, 4G, 5G, long-term evolution (LTE), new radio (NR), Wi-Fi, or any other wired or wireless connections or some combination of these. For example, the data connection may comprise a wireless connection, such as Wi-Fi, an internet connection, and an Ethernet connection.

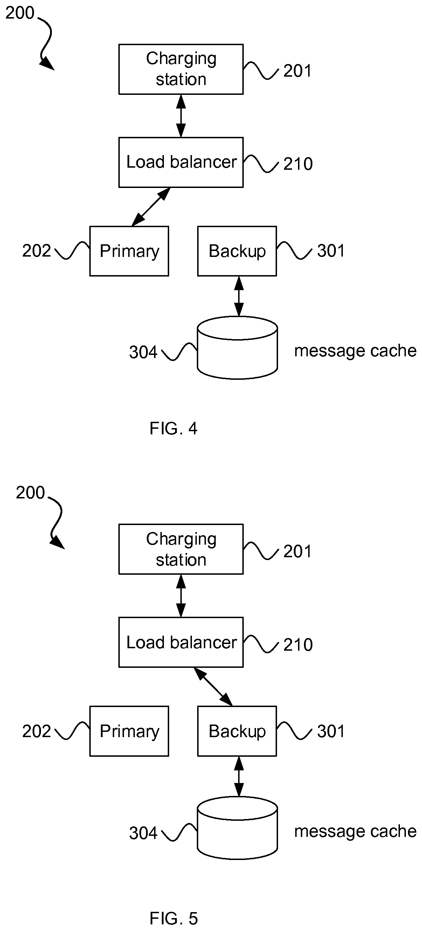

Fig. 4 illustrates a schematic representation of functionality of the EV charging system when the primary system is available according to an embodiment.

In normal situations, when the primary system 202 is available, all traffic from the EV charging stations 201 can be directed to the primary system 202. The primary system 202 can then handle traffic in a normal fashion, following the normal logic of the primary system 202.

The backup system 301 can be idle in the normal situation.

Fig. 5 illustrates a schematic representation of functionality of the EV charging system when the primary system is unavailable according to an embodiment.

When the primary system 202 is unavailable due to, for example, technical issues, traffic from the EV charging stations 201 can be directed to the backup system 301. This can be done manually or automatically based on, for example, health checks of the primary system 202.

When the traffic is directed to the backup system 301, the backup system 301 can function in the following fashion in a so-called "simple mode".

According to an embodiment, the backup EV charging management device 100 is configured to in response to the message comprising a boot notification, a status notification, a meter value, and/or a heartbeat, transmit an acknowledge message to the EV charging station.

The backup system 301 can be configured with static response messages for key OCPP messages. For example, in response to BootNotification-, StatusNotification-, Metervalues-, and Heartbeat- messages the backup system 301 can simply reply with an acknowledgement message, as defined, for example, in the OCPP protocol.

When in the simple mode, for Authorize, StartTransaction and StopTransaction messages, the backup system 301 can always give a static "Accepted" reply, regardless of the idTag which is used to start or stop charging.

In addition to giving standard responses, the backup system 301 can store all request- and reply-messages as they were sent and received to a message cache 304.

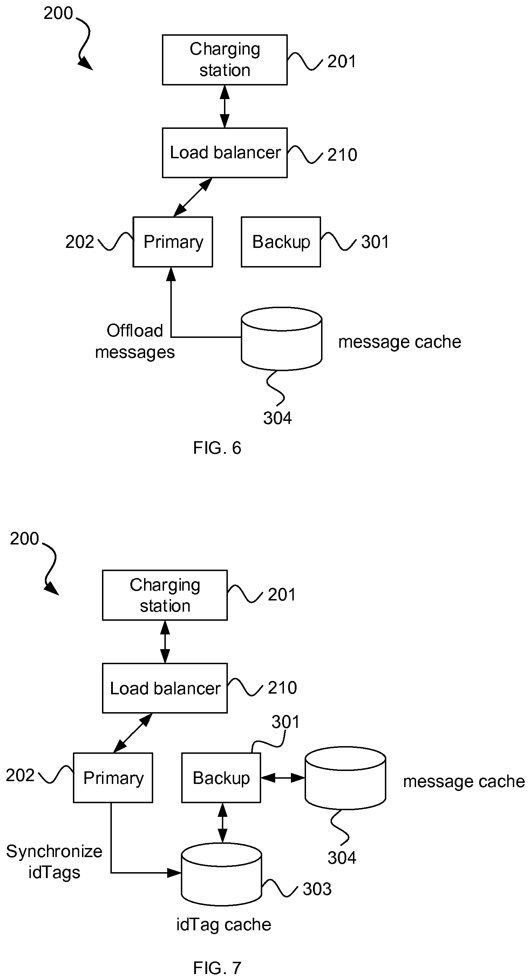

Fig. 6 illustrates a schematic representation of functionality of the EV charging system when the primary system is again available after being unavailable according to an embodiment.

According to an embodiment, the backup EV charging management device 100 is further configured to store the message and the response transmitted by the backup EV charging management device 100 in response to the message to a message cache 304, and in response to the primary EV charging management system 202 becoming available, provide the messages and the responses from the message cache 304 to the primary EV charging management system 202.

After the issues with the primary system 202 are resolved, and the primary system 202 is available again, the traffic can be switched back to the primary system 202.

Once the primary system 202 is available, the backup system 301 can provide the new messages, stored in the message cache 304, to the primary system 202. This may be referred to as message offloading. The primary system 202 can then processes the messages. This may be needed so that, for example, correct charge detail records are created to the primary system 202, so that, for example, users are invoiced correctly.

Backup system 301 can read all unprocessed messages from the message cache 304. The messages can comprise, for example, BootNotification, StatusNotification, Authorize, StartTransaction, and/or StopTransaction messages.

Backup system 304 can provide each message to the primary system 202 via, for example, an API. The primary system 202 can then process the messages normally and handle the normal logic, such as creating charge detail records.

It is possible that primary system 202 rejects some messages, such as Authorize-messages that had an invalid user identification, such as an idTag. For this reason, the backup system 301 can keep track of which messages are processed, approved or rejected. Backup system 301 can then create a report of successful or problematic charging during the time period when the primary system 202 was unavailable.

Fig. 7 illustrates a schematic representation of functionality of the EV charging system when the primary system is available, and the backup system is in advanced mode according to an embodiment.

Similarly to the embodiment of Fig. 4, in normal situations, when the primary system 202 is available, all traffic from the EV charging stations 201 can be directed to the primary system 202. The primary system 202 can then handle traffic in a normal fashion, following the normal logic of the primary system 202.

When in a so-called "advanced mode", the backup system 301 can, when a primary system 202 is available, synchronize an identification cache 303 of a backup system 301 with an identification cache of the primary system 202. The identification cache of the primary system 202 may be embodied in, for example, any of the data storages 204 of the primary system 202.

The identification cache of the primary system 202 can comprise identifications of EV charging station users that are allowed to use an EV charging station 201. For example, when a new user registers to the system, a new RFID can be created and linked to an account of the customer.

In the advanced mode, all user identification, such as idTag, changes done in the primary system 202 can be mirrored to the backup system 301. As a result, the backup system 301 can have a valid copy of all user identifications at all times.

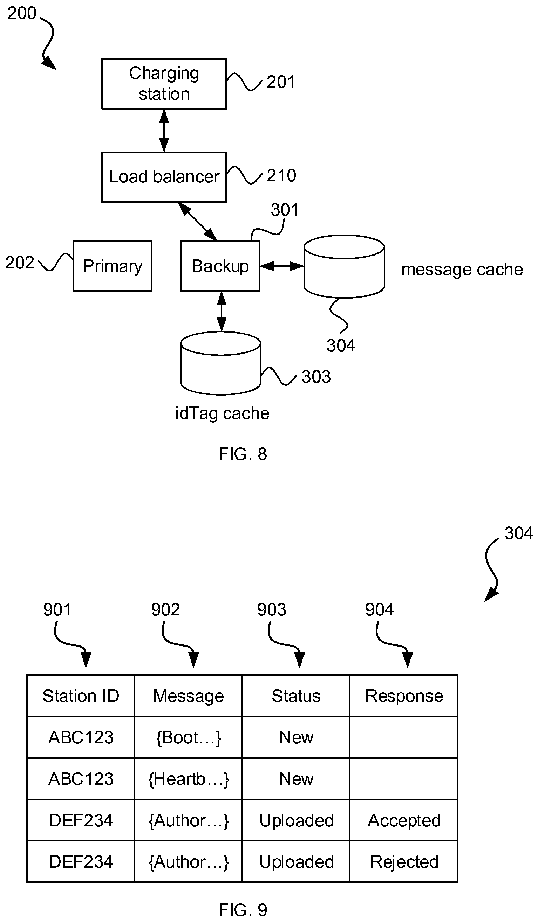

Fig. 8 illustrates a schematic representation of functionality of the EV charging system when the primary system is unavailable, and the backup system is in advanced mode according to an embodiment.

In an error situation, when the primary system 202 is not available, the traffic can be switched to the backup system 301 as in the simple mode. The messages can be processed in a similar fashion as in the simple mode with the following exceptions.

In the case of Authorize- and/or StopTransaction-messages, instead of always replying "Accepted", the backup system 301 can check from the identification cache 303 whether the identification in the message is valid. If yes, the backup system 303 can reply "Accepted" to the EV charging station 201, but if the idTag is not found to be valid, the backup system 301 can reply "Rejected" to the message.

One benefit of the advanced mode is that only the users with a valid identification can charge using the EV charging station 201. Thus, a user cannot use a random RFID token to start charging.

According to the invention, the backup EV charging management device 100 is further configured to, in response to an error with the identification cache 303 of the backup EV charging management system 301, when trying to compare the identification of the user trying to use the EV charging station to the identification cache 303 of the backup EV charging management system 301, transmit an acceptance message, indicating to accept the use of the EV charging station 201, to the EV charging station.

According to the invention, the error with the identification cache 303 of the backup EV charging management system 301 comprises the identification cache 303 of the backup EV charging management system 301 being unavailable or being out-of-date.

The identification cache 303 may be out-of-date, for example, when the identification cache has not been updated recently, and therefore the information content of the identification cache 303 may be out-of-date. For example, the backup EV charging management device 100 may be further configured to check whether the identification cache 303 has been updated within a preconfigured time period. If the identification cache 303 has not been updated within the preconfigured time period, the backup EV charging management device 100 can deem the identification cache 303 to be out-of-date. Alternatively or additionally, the out-of-date status of the identification cache 303 may be identified using some other procedure.

By default, the backup system 301 can be in the advanced mode so that it will be possible to authenticate users trying to charge, and to ensure that only valid users can use the EV charging stations 201.

In the simple mode, where the backup system 301 can accept all messages, anybody can in theory charge for free using, for example, any RFID token they may have.

However, the advanced mode can be more prone to errors than the simple mode. There is a need to synchronize data between the primary and backup systems, additional logic etc. which can fail. The simple mode can, however, be robust and basically fool-proof.

When traffic is directed to the backup system 301, the backup system 301 can always start in the advanced mode first. However, if there are any technical issues, such as the identification cache 303 is not working, not being up-to-date etc., the backup system 301 can be switched to the simple mode in order to ensure that users can use the EV charging stations 201.

Fig. 9 illustrates a schematic representation of a message cache according to an embodiment.

According to an embodiment, the backup EV charging management device 100 is further configured to store, with the message and a response transmitted by the backup EV charging management device 100 in response to the message, an identification of the EV charging station and/or a status indicating whether the message has been provided to the primary EV charging management system, to the message cache 304.

The message cache 304 can store at least some of the following information for each message stored in the message cache 304: individual identifier 901 of the EV charging station that sent the message, a raw OCPP message 902: contents of the request- and/or reply-message sent to and/or received from the EV charging station, status 903: indicates whether the message is new, or whether has already been offloaded to the primary system 202, primary system response 904: indicates response of the primary system 202 to the message - for example the primary system 202 may reject an Authorize-message or StartTransaction-message if the idTag in the message is invalid.

The backup system 301 may transmit the raw message 902 to the primary system 202 once the primary system 202 is again available.

Once the primary system 202 is again available, the backup system 301 can start to offload messages from the message cache 304 to the primary system 202.

For example, the backup system 301 can provide all messages with a status "New" to the primary system 202. The components of the backup system 301 transmitting the messages can wait for a reply from the primary system 202 for each message. After receiving a reply, the backup system 301 can update the status 903 to "Uploaded to primary system" and update the primary system response 904 to "accepted" or "rejected".

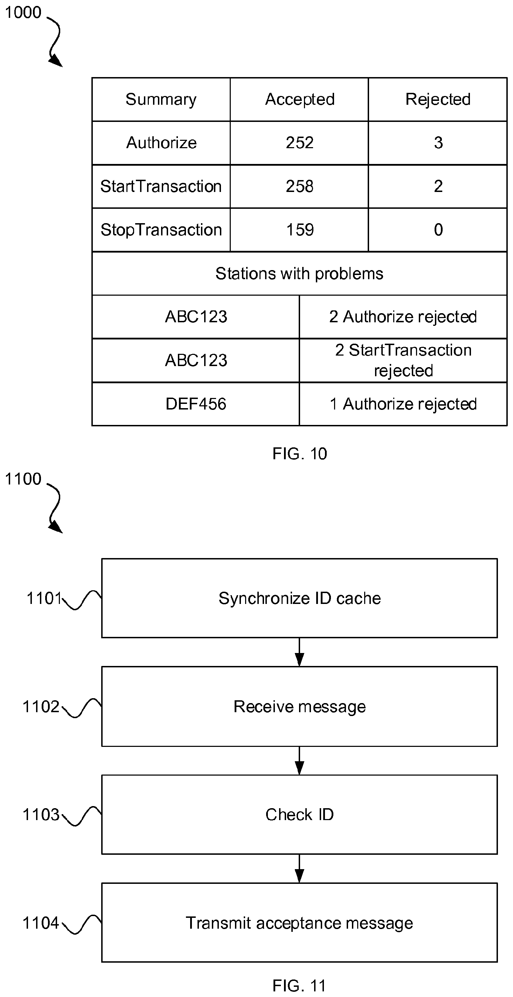

Fig. 10 illustrates a schematic representation of an offloading report according to an embodiment.

According to an embodiment, the backup EV management device 100 is further configured to receive, from the primary EV charging management system, for each message, an indication whether the message is approved or rejected by the primary EV charging management system 202, and compose an offloading report based at least on the received indications.

According to an embodiment, the offloading report comprises an indication of each message rejected by the primary EV charging management system 202 and an identifier of an EV charging station from which the message was sent.

After the messages are offloaded from the backup system 301 to the primary system 202, the backup system 301 can create an offloading report 1000.

The offloading report 1000 can conveniently report if any information was lost, for example if the system was unable to create critical charge detail records.

The offloading report 1000 can comprise at least some of the following information: Number of processed Authorize, StartTransaction and StopTransaction messages, how many of those messages where Accepted or Rejected by the primary system 202, for the rejected messages, list of station identifiers and number of rejected messages (in other words missing charge detail records).

According to an embodiment, the backup EV charging management device 100 is further configured to provide the offloading report 1000 to an administrator.

After the report 1000 is ready, the backup system 301 can transmit/provide the report to an administrator of the primary system 202. The administrator can verify that all data is processed, and to check for possible errors, such as rejected messages, manually.

Fig. 11 illustrates a schematic representation of a method 1100 according to an embodiment.

According to the invention, the method 1100 comprises, when a primary EV charging management system is available, synchronizing 1101 an identification cache of a backup EV charging management system with an identification cache of the primary EV charging management system, wherein the identification cache of the primary EV charging management system comprises identifications of EV charging station users that are allowed to use an EV charging station.

The method 1100 further comprises, when the primary EV charging management system is unavailable, receiving 1102 a message from the EV charging station.

The method 1100 further comprises, in response to the message being a request for charging using the EV charging station, wherein the request comprises an identification of a user trying to use the EV charging station, checking 1103 whether the request should be allowed by comparing the identification of the user trying to use the EV charging station to the identification cache of the backup EV charging management system.

The method 1100 further comprises, in response to determining that the request should be allowed, transmitting 1104 an acceptance message, indicating to accept the use of the EV charging station, to the EV charging station.

The method 1100 may be performed by the backup EV charging management device 100 of Fig. 1. Further features of the method 1100 directly result from the functionalities and parameters of the backup EV charging management device 100. The method 1100 can be performed, at least partially, by computer program(s).

An apparatus may comprise means for performing any aspect of the method(s) described herein. According to an embodiment, the means comprises at least one processor, and memory comprising program code, the at least one processor, and program code configured to, when executed by the at least one processor, cause performance of any aspect of the method.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A backup electric vehicle, EV, charging management device (100), comprising:
at least one processor (101); and
at least one memory (102) including computer program code;
the at least one memory (102) and the computer program code configured to, with the at least one processor (101), cause the backup EV charging management device (100) to:
when a primary EV charging management system (202) is available, synchronize an identification cache (303) of a backup EV charging management system (301) with an identification cache of the primary EV charging management system (202);
when the primary EV charging management system (202) is unavailable, receive a message from an EV charging station (201) that is connected to the primary EV charging management system (202) and to the backup EV charging management system (301);
**characterised in that** the identification cache of the primary EV charging management system comprises identifications of EV charging station users that are allowed to use the EV charging station (201) and **in that** the at least one memory (102) and the computer program code are further configured to, with the at least one processor (101), cause the backup EV charging management device (100) to:
in response to the message being a request for charging using the EV charging station (201), wherein the request comprises an identification of a user trying to use the EV charging station, check whether the request should be allowed by comparing the identification of the user trying to use the EV charging station to the identification cache of the backup EV charging management system;
in response to determining that the request should be allowed, transmit an acceptance message, indicating to accept the use of the EV charging station, to the EV charging station; and
in response to an error with the identification cache (303) of the backup EV charging management system, when trying to compare the identification of the user trying to use the EV charging station to the identification cache of the backup EV charging management system, transmit an acceptance message, indicating to accept the use of the EV charging station, to the EV charging station, wherein the error with the identification cache (303) of the backup EV charging management system comprises the identification cache (303) of the backup EV charging management system (301) being unavailable or being out-of-date.

2. The backup EV charging management device (100) according to claim 1, wherein the at least one memory (102) and the computer program code are further configured to, with the at least one processor (101), cause the backup EV charging management device (100) to:
in response to the message comprising a boot notification, a status notification, a meter value, and/or a heartbeat, transmit an acknowledge message to the EV charging station.

3. The backup EV charging management device (100) according to any preceding claim, wherein the at least one memory (102) and the computer program code are further configured to, with the at least one processor (101), cause the backup EV charging management device (100) to:
store the message and a response transmitted by the backup EV charging management device (100) in response to the message to a message cache (304); and
in response to the primary EV charging management system (202) becoming available, provide the messages and the responses from the message cache (304) to the primary EV charging management system.

4. The backup EV charging management device (100) according to claim 3, wherein the at least one memory (102) and the computer program code are further configured to, with the at least one processor (101), cause the backup EV charging management device (100) to:
store, with the message and the response transmitted by the backup EV charging management device in response to the message, an identification of the EV charging station (201) and/or a status indicating whether the message has been provided to the primary EV charging management system (202), to the message cache (304).

5. The backup EV charging management device (100) according to claim 3 or claim 4, wherein the at least one memory (102) and the computer program code are further configured to, with the at least one processor (101), cause the backup EV charging management device (100) to:
receive, from the primary EV charging management system (202), for each message, an indication whether the message is approved or rejected by the primary EV charging management system; and
compose an offloading report (1000) based at least on the received indications.

6. The backup EV charging management device (100) according to claim 5, wherein the offloading report comprises an indication of each message rejected by the primary EV charging management system (202) and an identifier of the EV charging station (201) from which the message was sent.

7. The backup EV charging management device (100) according to claim 5 or claim 6, wherein the at least one memory (102) and the computer program code are further configured to, with the at least one processor (101), cause the backup EV charging management device (100) to provide the offloading report to an administrator.

8. An electric vehicle, EV, charging system (200), comprising:
a primary EV charging management system (202);
a backup EV charging management system (301) comprising a backup EV charging management device (100) according to any of claims 1 - 7;
at least one EV charging station (201); and
a load balancer (210) configured to forward messages from the at least one EV charging station (201) to the primary EV charging management system (202) when the primary EV charging management system (202) is available and forward messages from the at least one EV charging station (201) to the backup EV charging management system (202) when the primary EV charging management system (202) is unavailable.

9. A method (1100), comprising:
when a primary electric vehicle, EV, charging management system (202) is available, synchronizing (1101) an identification cache of a backup EV charging management system (100) with an identification cache of the primary EV charging management system;
when the primary EV charging management system is unavailable, receiving (1102) a message from an EV charging station (201) that is connected to the primary EV charging management system (202) and to the backup EV charging management system (301);
**characterised in that** the identification cache of the primary EV charging management system comprises identifications of EV charging station users that are allowed to use the EV charging station and **in that** the method further comprises:
in response to the message being a request for charging using the EV charging station, wherein the request comprises an identification of a user trying to use the EV charging station, checking (1103) whether the request should be allowed by comparing the identification of the user trying to use the EV charging station to the identification cache of the backup EV charging management system;
in response to determining that the request should be allowed, transmitting (1104) an acceptance message, indicating to accept the use of the EV charging station, to the EV charging station; and
in response to an error with the identification cache of the backup EV charging management system, when trying to compare the identification of the user trying to use the EV charging station to the identification cache of the backup EV charging management system, transmitting an acceptance message, indicating to accept the use of the EV charging station, to the EV charging station, wherein the error with the identification cache of the backup EV charging management system comprises the identification cache of the backup EV charging management system being unavailable or being out-of-date.

10. A computer program product **character** - **ised** in that the computer program product comprises program code configured to perform the method according to claim 9 when the computer program product is executed on the backup electric vehicle, EV, charging management device (100) of any of claims 1 - 7.

## Patentansprüche

1. Reserveladeverwaltungsvorrichtung (100) für ein Elektrofahrzeug, EV, umfassend:
mindestens einen Prozessor (101);
mindestens einen Speicher (102), der Computerprogrammcode enthält;
wobei der mindestens eine Speicher (102) und der Computerprogrammcode dazu konfiguriert sind, dass sie mit dem mindestens einen Prozessor (101) die Reserveladeverwaltungsvorrichtung für ein EV (100) dazu veranlassen:
wenn ein primäres EV-Ladeverwaltungssystem (202) verfügbar ist, einen Identifikations-Cache (303) eines EV-Reserveladeverwaltungssystems (301) mit einem Identifikations-Cache des primären EV-Ladeverwaltungssystems (202) zu synchronisieren;
wenn das primäre EV-Ladeverwaltungssystem (202) nicht verfügbar ist, eine Nachricht von einer EV-Ladestation (201), die mit dem primären EV-Ladeverwaltungssystems (202) und mit dem EV-Reserveladeverwaltungssystems (301) verbunden ist, zu empfangen;
**dadurch gekennzeichnet, dass** der Identifikations-Cache des primären EV-Ladeverwaltungssystems Identifikationen von EV-Ladestationsbenutzern umfasst, denen es erlaubt ist, die EV-Ladestation (201) zu verwenden und dass der mindestens eine Speicher (102) und der Computerprogrammcode ferner dazu konfiguriert sind, dass sie mit dem mindestens einen Prozessor (101) die Reserveladeverwaltungsvorrichtung für ein EV (100) dazu veranlassen:
in Antwort auf die Nachricht, bei der es sich um eine Anfrage zum Laden unter Verwendung der EV-Ladestation (201) handelt, wobei die Anfrage eine Identifikation eines Benutzers umfasst, der versucht, die EV-Ladestation zu verwenden, zu prüfen, ob die Anfrage erlaubt werden soll, durch Vergleichen der Identifikation des Benutzers, der versucht, die EV-Ladestation zu verwenden, mit dem Identifikations-Cache des EV-Reserveladeverwaltungssystems;
in Antwort auf das Bestimmen, dass die Anfrage erlaubt werden soll, eine Akzeptanznachricht an die EV-Ladestation zu übertragen, die angibt, die Verwendung der EV-Ladestation zu akzeptieren; und
in Antwort auf einen Fehler mit dem Identifikations-Cache (303) des EV-Reserveladeverwaltungssystems beim Versuch, die Identifikation des Benutzers, der versucht, die EV-Ladestation zu verwenden, mit dem Identifikations-Cache des EV-Reserveladeverwaltungssystems zu vergleichen, eine Akzeptanznachricht an die EV-Ladestation zu übertragen, die angibt, die Verwendung der EV-Ladestation zu akzeptieren, wobei der Fehler mit dem Identifikations-Cache (303) des EV-Reserveladeverwaltungssystems umfasst, dass der Identifikations-Cache (303) des EV-Reserveladeverwaltungssystems (301) nicht verfügbar ist oder veraltet ist.

2. Reserveladeverwaltungsvorrichtung (100) für ein EV gemäß Anspruch 1, wobei der mindestens eine Speicher (102) und der Computerprogrammcode ferner dazu konfiguriert sind, dass sie mit dem mindestens einen Prozessor (101) die Reserveladeverwaltungsvorrichtung für ein EV (100) dazu veranlassen:
in Antwort auf die Nachricht, die eine Startbenachrichtigung, eine Statusbenachrichtigung, einen Zählerwert und/oder einen Heartbeat umfasst, eine Bestätigungsnachricht an die EV-Ladestation zu übertragen.

3. Reserveladeverwaltungsvorrichtung (100) für ein EV gemäß einem der vorhergehenden Ansprüche, wobei der mindestens eine Speicher (102) und der Computerprogrammcode ferner dazu konfiguriert sind, dass sie mit dem mindestens einen Prozessor (101) die Reserveladeverwaltungsvorrichtung für ein EV (100) dazu veranlassen:
die Nachricht und eine Antwort, die von der Reserveladeverwaltungsvorrichtung für ein EV (100) in Antwort auf die Nachricht übertragen wurde, in einem Nachrichten-Cache (304) zu speichern; und
in Antwort darauf, dass das primäre EV-Ladeverwaltungssystem (202) verfügbar wird, die Nachrichten und die Antworten aus dem Nachrichten-Cache (304) dem primären EV-Ladeverwaltungssystem bereitzustellen.

4. Reserveladeverwaltungsvorrichtung (100) für ein EV gemäß Anspruch 3, wobei der mindestens eine Speicher (102) und der Computerprogrammcode ferner dazu konfiguriert sind, dass sie mit dem mindestens einen Prozessor (101) die Reserveladeverwaltungsvorrichtung für ein EV (100) dazu veranlassen:
eine Identifikation der EV-Ladestation (201) und/oder einen Status, der angibt, ob die Nachricht dem primären EV-Ladeverwaltungssystem (202) bereitgestellt wurde, mit der Nachricht und der Antwort, die durch die Reserveladeverwaltungsvorrichtung für ein EV (100) in Antwort auf die Nachricht übertragen wurde, im Nachrichten-Cache (304) zu speichern.

5. Reserveladeverwaltungsvorrichtung (100) für ein EV gemäß Anspruch 3 oder Anspruch 4, wobei der mindestens eine Speicher (102) und der Computerprogrammcode ferner dazu konfiguriert sind, dass sie mit dem mindestens einen Prozessor (101) die Reserveladeverwaltungsvorrichtung für ein EV (100) dazu veranlassen:
von dem primären EV-Ladeverwaltungssystem (202) für jede Nachricht eine Angabe darüber zu empfangen, ob die Nachricht von dem primären EV-Ladeverwaltungssystem genehmigt oder abgelehnt wird; und
einen Entladebericht (1000) zumindest basierend auf den aufgenommenen Angaben zusammenzustellen.

6. Reserveladeverwaltungsvorrichtung (100) für ein EV gemäß Anspruch 5, wobei der Entladebericht eine Angabe jeder vom primären EV-Ladeverwaltungssystem (202) abgelehnten Nachricht und eine Kennung der EV-Ladestation (201), von der die Nachricht gesendet wurde, enthält.

7. Reserveladeverwaltungsvorrichtung (100) für ein EV gemäß Anspruch 5 oder Anspruch 6, wobei der mindestens eine Speicher (102) und der Computerprogrammcode ferner dazu konfiguriert sind, dass sie mit dem mindestens einen Prozessor (101) die Reserveladeverwaltungsvorrichtung für ein EV (100) dazu veranlassen den Entladebericht an einen Administrator bereitzustellen.

8. Elektrofahrzeug, EV, Ladesystem (200), umfassend:
ein primäres EV-Ladeverwaltungssystem (202);
ein EV-Reserveladeverwaltungssystem (301), das eine Reserveladeverwaltungsvorrichtung (100) für ein EV gemäß einem der Ansprüche 1-7 umfasst;
mindestens eine EV-Ladestation (201); und
einen Lastausgleicher (210), der dazu konfiguriert ist, Nachrichten von der mindestens einen EV-Ladestation (201) an das primäre EV-Ladeverwaltungssystem (202) weiterzuleiten, wenn das primäre EV-Ladeverwaltungssystem (202) verfügbar ist, und Nachrichten von der mindestens einen EV-Ladestation (201) an das EV-Reserveladeverwaltungssystem (202) weiterzuleiten, wenn das primäre EV-Ladeverwaltungssystem (202) nicht verfügbar ist.

9. Verfahren (1100), umfassend:
wenn ein primäres Elektrofahrzeug-, EV, Ladeverwaltungssystem (202) verfügbar ist, Synchronisieren (1101) eines Identifikation-Caches eines EV-Reserveladeverwaltungssystems (100) mit einem Identifikations-Cache des primären EV-Ladeverwaltungssystems;
wenn das primäre EV-Ladeverwaltungssystem nicht verfügbar ist, Empfangen (1102) einer Nachricht von einer EV-Ladestation (201), die mit dem primären EV-Ladeverwaltungssystem (202) und dem EV-Reserveladeverwaltungssystem (301) verbunden ist;
**dadurch gekennzeichnet, dass** das Identifikation-Cache des primären EV-Ladeverwaltungssystem Identifikationen von EV-Ladestationsbenutzern umfasst, die die EV-Ladestation benutzen dürfen und dass
das Verfahren ferner folgendes umfasst:
in Antwort auf die Nachricht, bei der es sich um eine Anfrage zum Laden unter Verwendung der EV-Ladestation handelt, wobei die Anfrage eine Identifikation eines Benutzers umfasst, der versucht, die EV-Ladestation zu verwenden, Überprüfen (1103), ob die Anfrage erlaubt werden sollte, indem die Identifikation des Benutzers, der versucht, die EV-Ladestation zu verwenden, mit dem Identifikations-Cache des EV-Reserveladeverwaltungssystems verglichen wird;
in Antwort auf das Bestimmen, dass die Anfrage erlaubt werden sollte, Übertragen (1104) einer Akzeptanznachricht, die angibt, die Verwendung der EV-Ladestation zu akzeptieren, an die EV-Ladestation, und
in Antwort auf einen Fehler mit dem Identifikations-Cache des EV-Reserveladeverwaltungssystems, wenn versucht wird, die Identifikation des Benutzers, der versucht, die EV-Ladestation zu verwenden, mit dem Identifikations-Cache des EV-Reserveladeverwaltungssystems zu vergleichen, Übertragen einer Akzeptanznachricht, die angibt, die Verwendung der EV-Ladestation zu akzeptieren, an die EV-Ladestation, wobei der Fehler mit dem Identifikations-Cache des EV-Reserveladeverwaltungssystems umfasst, dass der Identifikations-Cache des EV-Reserveladeverwaltungssystems nicht verfügbar oder veraltet ist.

10. Computerprogrammprodukt, **dadurch gekennzeichnet, dass** das Computerprogrammprodukt einen Programmcode umfasst, der dazu konfiguriert ist, das Verfahren gemäß Anspruch 9 durchzuführen, wenn das Computerprogrammprodukt auf der Reserveladeverwaltungsvorrichtung (100) für ein Elektrofahrzeug, EV gemäß einem der Ansprüche 1 - 7 ausgeführt wird.

## Revendications

1. Dispositif (100) de gestion de recharge de véhicule électrique, VE, de secours, comprenant :
au moins un processeur (101) ; et
au moins une mémoire (102) incluant un code de programme informatique ;
la au moins une mémoire (102) et le code de programme informatique étant configurés pour, avec le au moins un processeur (101), amener le dispositif (100) de gestion de recharge de VE de secours à :
lorsqu'un système (202) de gestion de recharge de VE primaire est disponible, synchroniser un cache d'identification (303) d'un système (301) de gestion de recharge de VE de secours avec un cache d'identification du système (202) de gestion de recharge de VE primaire ;
lorsque le système (202) de gestion de recharge de VE primaire est indisponible, recevoir un message en provenance d'une station (201) de recharge de VE qui est connectée au système (202) de gestion de recharge de VE primaire et au système (301) de gestion de recharge de VE de secours ;
**caractérisé en ce que** le cache d'identification du système de gestion de recharge de VE primaire comprend des identifications d'utilisateurs de station de recharge de VE qui sont autorisés à utiliser la station (201) de recharge de VE et **en ce que** la au moins une mémoire (102) et le code de programme informatique sont en outre configurés pour, avec le au moins un processeur (101), amener le dispositif (100) de gestion de recharge de VE de secours à :
en réponse au message qui est une demande de recharge en utilisant la station (201) de recharge de VE, dans lequel la demande comprend une identification d'un utilisateur essayant d'utiliser la station de recharge de VE, vérifier si la demande doit être autorisée en comparant l'identification de l'utilisateur essayant d'utiliser la station de recharge de VE au cache d'identification du système de gestion de recharge de VE de secours ;
en réponse à la détermination que la demande doit être autorisée, transmettre un message d'acceptation, indiquant d'accepter l'utilisation de la station de recharge de VE, à la station de recharge de VE ; et
en réponse à une erreur avec le cache d'identification (303) du système de gestion de recharge de VE de secours, lors d'une tentative de comparaison de l'identification de l'utilisateur essayant d'utiliser la station de recharge de VE au cache d'identification du système de gestion de recharge de VE de secours, transmettre un message d'acceptation, indiquant d'accepter l'utilisation de la station de recharge de VE, à la station de recharge de VE, dans lequel l'erreur avec le cache d'identification (303) du système de gestion de recharge de VE de secours comprend l'indisponibilité ou la péremption du cache d'identification (303) du système (301) de gestion de recharge de VE de secours.

2. Dispositif (100) de gestion de recharge de VE de secours selon la revendication 1, dans lequel la au moins une mémoire (102) et le code de programme informatique étant en outre configurés pour, avec le au moins un processeur (101), amener le dispositif (100) de gestion de recharge de VE de secours à :
en réponse au message comprenant une notification de démarrage, une notification d'état, une valeur de compteur et/ou un battement de coeur, transmettre un message d'accusé de réception à la station de recharge de VE.

3. Dispositif (100) de gestion de recharge de VE de secours selon une quelconque revendication précédente, dans lequel la au moins une mémoire (102) et le code de programme informatique étant en outre configurés pour, avec le au moins un processeur (101), amener le dispositif (100) de gestion de recharge de VE de secours à :
stocker le message et une réponse transmise par le dispositif (100) de gestion de recharge de VE de secours en réponse au message à un cache (304) de message ; et
en réponse au fait que le système (202) de gestion de recharge de VE primaire soit devenu disponible, fournir les messages et les réponses depuis le cache (304) de message au système de gestion de recharge de VE primaire.

4. Dispositif (100) de gestion de recharge de VE de secours selon la revendication 3, dans lequel la au moins une mémoire (102) et le code de programme informatique étant en outre configurés pour, avec le au moins un processeur (101), amener le dispositif (100) de gestion de recharge de VE de secours à :
stocker, avec le message et la réponse transmise par le dispositif de gestion de recharge de VE de secours en réponse au message, une identification de la station (201) de recharge de VE et/ou un état indiquant si le message a été fourni par le système (202) de gestion de recharge de VE primaire, au cache (304) de message.

5. Dispositif (100) de gestion de recharge de VE de secours selon la revendication 3 ou la revendication 4, dans lequel la au moins une mémoire (102) et le code de programme informatique étant en outre configurés pour, avec le au moins un processeur (101), amener le dispositif (100) de gestion de recharge de VE de secours à :
recevoir, en provenance du système (202) de gestion de recharge de VE primaire, pour chaque message, une indication pour savoir si le message est approuvé ou rejeté par le système de gestion de recharge de VE primaire ; et
composer un rapport de déchargement (1000) sur la base, au moins, des indications reçues.

6. Dispositif (100) de gestion de recharge de VE de secours selon la revendication 5, dans lequel le rapport de déchargement comprend une indication de chaque message rejeté par le système (202) de gestion de recharge de VE primaire et un identifiant de la station (201) de recharge de VE depuis laquelle le message a été envoyé.

7. Dispositif (100) de gestion de recharge de VE de secours selon la revendication 5 ou la revendication 6, dans lequel la au moins une mémoire (102) et le code de programme informatique étant en outre configurés pour, avec le au moins un processeur (101), amener le dispositif (100) de gestion de recharge de VE de secours à fournir le rapport de déchargement à un administrateur.

8. Système (200) de recharge de véhicule électrique, VE, comprenant :
un système (202) de gestion de recharge de VE primaire ;
un système (301) de gestion de recharge de VE de secours comprenant un dispositif (100) de gestion de recharge de VE de secours selon l'une quelconque des revendications 1 à 7 ;
au moins une station (201) de recharge de VE ; et
un dispositif d'équilibrage (210) de recharge configuré pour transférer des messages depuis la au moins une station (201) de recharge de VE au système (202) de gestion de recharge de VE primaire lorsque le système (202) de gestion de recharge de VE primaire est disponible et transférer des messages depuis la au moins une station (201) de recharge de VE au système (202) de gestion de recharge de VE de secours lorsque le système (202) de gestion de recharge de VE primaire est indisponible

9. Procédé (1100), comprenant :
lorsqu'un système (202) de gestion de recharge de véhicule électrique, VE, primaire est disponible, la synchronisation (1101) d'un cache d'identification d'un système (100) de gestion de recharge de VE de secours avec un cache d'identification du système de gestion de recharge de VE primaire ;
lorsque le système de gestion de recharge de VE primaire est indisponible, la réception (1102) d'un message en provenance d'une station (201) de recharge de VE qui est connectée au système (202) de gestion de recharge de VE primaire et au système (301) de gestion de recharge de VE de secours ;
**caractérisé en ce que** le cache d'identification du système de gestion de recharge de VE primaire comprend des identifications d'utilisateurs de station de recharge de VE qui sont autorisés à utiliser une station de recharge de VE et **en ce que** le procédé comprend en outre :
en réponse au message qui est une demande de recharge en utilisant la station de recharge de VE, dans lequel la demande comprend une identification d'un utilisateur essayant d'utiliser la station de recharge de VE, le fait de vérifier (1103) si la demande doit être autorisée en comparant l'identification de l'utilisateur essayant d'utiliser la station de recharge de VE au cache d'identification du système de gestion de recharge de VE de secours ;
en réponse à la détermination que la demande doit être autorisée, la transmission (1104) d'un message d'acceptation, indiquant d'accepter l'utilisation de la station de recharge de VE, à la station de recharge de VE ; et
en réponse à une erreur avec le cache d'identification du système de gestion de recharge de VE de secours, lors d'une tentative de comparaison de l'identification de l'utilisateur essayant d'utiliser la station de recharge de VE au cache d'identification du système de gestion de recharge de VE de secours, la transmission d'un message d'acceptation, indiquant d'accepter l'utilisation de la station de recharge de VE, à la station de recharge de VE, dans lequel l'erreur avec le cache d'identification du système de gestion de recharge de VE de secours comprend l'indisponibilité ou la péremption du cache d'identification du système de gestion de recharge de VE de secours.

10. Produit de programme informatique **caractérisé en ce que** le produit de programme informatique comprend un code de programme configuré pour mettre en œuvre le procédé selon la revendication 9 lorsque le produit de programme informatique est mis en œuvre sur le dispositif (100) de gestion de recharge de véhicule électrique, VE, de secours selon l'une quelconque des revendications 1 à 7.
